# EUROPÄISCHE PATENTSCHRIFT

(11) **EP 1 387 443 B1**
(45) Veröffentlichungstag und Bekanntmachung des Hinweises auf die Patenterteilung: **12.08.2009**
(21) Anmeldenummer: 03012889.6
(22) Anmeldetag: 06.06.2003
(51) Int. Cl.: H01R 13/24, H02M 1/00

(54) **Umrichtersystem**
Converter system
Système convertisseur

(30) Priorität: 01.08.2002 DE 10235324
(43) Veröffentlichungstag der Anmeldung: 04.02.2004
(73) Patentinhaber: SEW-EURODRIVE GmbH & Co. KG, 76646 Bruchsal (DE)
(72) Erfinder: Meyer, Harald, 75223 Niefern-Öschelbronn (DE); Momann, Dirk, 76646 Bruchsal-Heidelsheim (DE)

(56) Entgegenhaltungen:
- DE-A- 19 509 658
- US-A- 5 259 781
- US-A1- 2002 098 742
- US-B1- 6 336 815
- "Betriebsanleitung 09223703DE" [Online] , SEW-EURODRIVE GMBH&CO , BRUCHSAL (DE) XP002261570 Gefunden im Internet: <URL: www.sew-eurodrive.de/pdf/09223703.pdf> [gefunden am 2003-11-10] * das ganze Dokument *

## Beschreibung

Die Erfindung betrifft ein Umrichtersystem.

Aus der Seite http://www.sew-eurodrive.de/deutsch/pdf/09223703.pdf, insbesondere aus den Seiten 1, 7, 8, 13 hieraus, ist das Umrichtersystem MOVIDYN bekannt, das Versorgungsmodule und Achsmodule umfasst. Dabei wird bei allen Modulen der Gleichspannungszwischenkreis, nachfolgend auch als GSZ bezeichnet, zur Leistungsversorgung der Achsmodule verbunden. Er umfasst drei Starkstromschienen.

Die Verbindungstechnik für Niederspannungs- und Signalverbindungen (NSV) des Standes der Technik weist in bekannter Ausführung mit Steckverbinder den Nachteil auf, dass die Verbindung zwischen unterschiedlichen Geräten entweder
a) über Kabelstücke erfolgt, die der Anwender nach Verschraubung der Geräte angepasst auf die Gerätebreite applizieren muss oder
b) vorkonfektioniert nur über umständlich handhabbare Kabelschlaufen möglich ist.

Der Erfindung liegt die Aufgabe zugrunde, ein Umrichtersystem weiterzubilden, das kostengünstig herstellbar und schnell und einfach montierbar und anschließbar ist.

Erfindungsgemäß wird die Aufgabe bei dem Umrichtersystem nach den in Anspruch 1 angegebenen Merkmalen gelöst.

Wesentliche Merkmale der Erfindung bei dem Umrichtersystem sind, dass mindestens ein Versorgungsmodul VM und mindestens ein Achsmodul AM umfasst ist, wobei die Module elektrische erste Anschlussvorrichtungen für Niederspannungs- und Signalverbindungen für elektrischen Leitungen für aufweisen, wobei die Module weitere Anschlussvorrichtungen für elektrischen Leitungen für Starkstrom aufweisen, wobei zum Herstellen von elektrischen Niederspannungs- und Signalverbindungen zwischen benachbarten Modulen jedes Modul eine Verbindungsplatte umfasst, die freiliegende Bereiche von elektrischen Leiterbahnen derart aufweist, dass bei geeigneter Verschiebung und/oder Positionierung der Verbindungsplatte die ersten Anschlussvorrichtungen mit den freiliegenden Bereichen in elektrischen Kontakt bringbar sind.

Von Vorteil ist dabei, dass das Umrichtersystem kostengünstig herstellbar und schnell und einfach montierbar und anschließbar ist wegen der Verbindungsplatte. Insbesondere wird bei der Erfindung eine neuartige Anordnung einer Kontaktierungstechnik über Federkontakte und eine neuartige Anordnung einer Verbindungsplatte vorgesehen. Somit werden einfach und kostengünstig herzustellende Teile verwendet, wodurch das Umrichtersystem ebenfalls kostengünstig herzustellen ist. Insbesondere sind zur Einhaltung von elektrischen Richtlinien, beispielsweise UL, sehr kostengünstige Kunststoffteile verwendbar.

Bei einer bevorzugten Ausführung sind die ersten Anschlussvorrichtungen mit den freiliegenden Bereichen mittels Spannelementen und/oder einer Druckplatte in elektrischen Kontakt bringbar. Von Vorteil ist dabei, dass nur wenige Teile notwendig sind, die sogar einfach und kostengünstig fertigbar sind.

Bei einer bevorzugten Ausführung dient der Gleichspannungszwischenkreis zur Leistungsversorgung der Module. Von Vorteil ist dabei, dass ein einziges Versorgungsmodul über den Gleichspannungszwischenkreis mehrere Module versorgen kann. Somit fällt im Vergleich zu Ausführungen mit unabhängigen Einzelumrichtern eine entsprechende Anzahl von Gleichrichtern weg.

Bei einer bevorzugten Ausführung sind die Spannelemente und/oder Druckplatte zur elektrischen Isolierung und/oder Einhaltung elektrischer Vorschriften ausgelegt und verwendet. Von Vorteil ist dabei, dass sie nicht nur die mechanische sondern auch elektrische Funktion aufweisen, insbesondere Abschirmung elektromagnetischer Wellen.

Bei einer bevorzugten Ausführung weisen die Module jeweils eine Abdeckung zur elektrischen Isolierung der weiteren Anschlussvorrichtungen für elektrischen Leitungen für Starkstrom auf und es ist die Abdeckung auch für die ersten Anschlussvorrichtungen vorgesehen, insbesondere auch zur Isolierung und/oder Einhaltung elektrischer Vorschriften. Von Vorteil ist dabei, dass die für die Starkstrom-Anschlussvorrichtungen sowieso notwendige Abdeckung auch für NSV-Anschlussvorrichtungen verwendbar sind, insbesondere auch zur Isolierung, Abschirmung elektromagnetischer Wellen und dergleichen.

Die Verbindung der NSV mit der Anschlusseinheit bietet den Vorteil, dass die notwendige Abdeckung der Anschlusseinheit aufgrund der hohen Spannungen gleichzeitig vorteilhaft zur Einhaltung weiterer elektrischer Vorschriften für die NSV genutzt werden kann.

Weitere Vorteile ergeben sich aus den Unteransprüchen.

Die Erfindung zeigt bei einem Umrichtersystem zwischen Einspeise- und Achsmodulen notwendige Anschlusstechnik für einen Gleichspannungszwischenkreis (GSZ) sowie für Niederspannungs- und Signalverbindungen (NSV) in kostensparender Weise.

Die Erfindung wird nun anhand von Abbildungen näher erläutert:

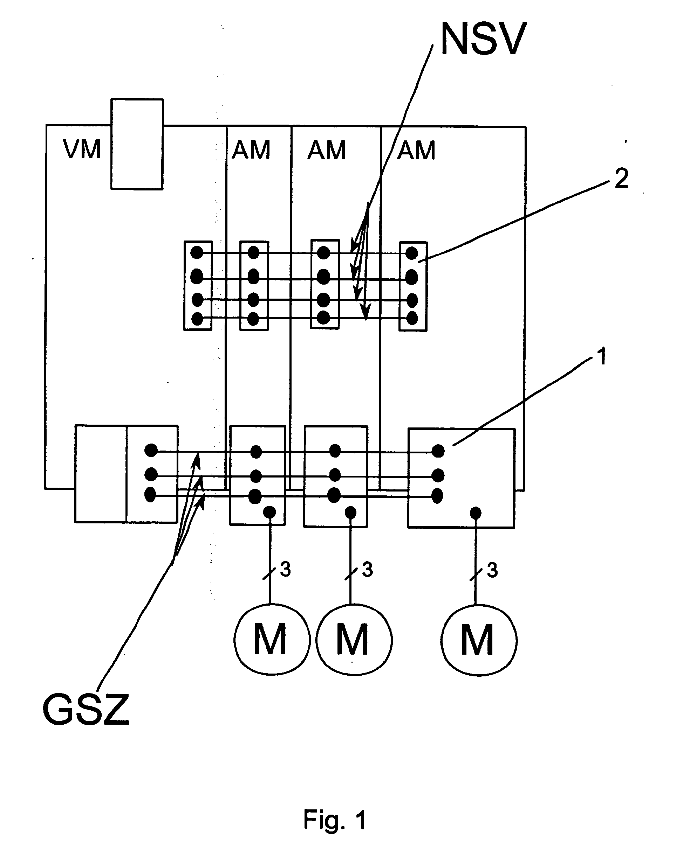

Bei dem erfindungsgemäßen Ausführungsbeispiel nach Figur 1 ist ein erstes beispielhaftes Umrichtersystem gezeigt, bei dem ein Einspeisemodul oder Versorgungsmodul VM und mehrere Achsmodule AM nebeneinander vorgesehen sind. Das Versorgungsmodul VM speist den Gleichspannungszwischenkreis (GSZ), der zur Leistungsversorgung der Achsmodule AM mit diesen elektrisch verbindbar ist, wobei die Achsmodule Umrichterfunktionalität aufweisen und mittels Motorversorgungsleitungen 3 verbundene Elektromotoren M versorgen.

Die elektrischen Leitungen des Gleichspannungszwischenkreises (GSZ) sind als Stromschienen oder Kabeln oder Litzen vorsehbar, wobei die Module entsprechende Anschlussvorrichtungen, wie Stecker oder Schraubverbindungen, aufweisen. Der GSZ umfasst in diesem Beispiel drei Leitungen. Als Niederspannungs- und Signalverbindungen (NSV) zwischen Versorgungs- oder Einspeise- und Achsmodulen ist eine andere Verbindungstechnik vorgesehen.

Die Anschlusseinheit 1 ist für NSV und die Anschlusseinheit 2 für GSZ vorgesehen.

Bei dem erfindungsgemäßen Ausführungsbeispiel nach Figur 2, 3 und 4 ist die Anschlusseinheit für eines der Module schematisch skizziert, das Stromschienen beim Gleichspannungszwischenkreis (GSZ) aufweist.

In Figur 2 ist eine Seitenansicht skizziert.
In Figur 3 ist eine Vorderansicht skizziert.
In Figur 4 ist eine Draufsicht skizziert.
In Figur 4a ist eine Draufsicht skizziert auf zwei Anschlusseinheiten.

Als Niederspannungs- und Signalverbindungen (NSV) zwischen Versorgungs- oder Einspeise- und Achsmodulen ist eine Verbindungsplatte 11 vorgesehen, die elektrische Leiterbahnen aufweist. Diese elektrischen Leiterbahnen sind derart vorgesehen, dass es an der Oberfläche der Verbindungsplatte 11 elektrische Kontaktbereiche gibt, also freiliegende Bereiche, bei denen metallisches Material oberflächenbildend ist. Als Verbindungsplatte ist vorteiligerweise eine kostengünstig herstellbare Leiterplatte verwendbar. Aber in anderen erfindungsgemäßen Ausführungsbeispielen sind auch andere, ähnlich aufgebaute Platten verwendbar.

Diese Kontaktbereiche sind mittels Verschieben der Verbindungsplatte 11 in Pfeilrichtung in Kontakt bringbar mit Federkontakten 13 der Module. Zur Herstellung geringer Übergangswiderstände im Kontaktbereich wird die Verbindungsplatte 11 nach dem Verschieben mittels Spannelementen 14, die in einer Druckplatte 15 vorgesehen sind, gegen die Federkontakte 13 gedrückt.

In einem anderen erfindungsgemäßen Ausführungsbeispiel ist die Druckplatte auch verzichtbar und die Spannelemente 14 sind beispielhaft als Schrauben mit genügend großen Köpfen ausgeführt.

In einem wiederum anderen erfindungsgemäßen Ausführungsbeispiel ist sind statt der Schrauben auch Bajonett-Verschlüsse vorteilhaft verwendet. Alternativ ist auch ein Hebel verwendbar.

Mit den Spannelementen 14 wird auf die Druckplatte 15 Kraft ausgeübt, wobei die Druckplatte 15 wiederum Kraft auf die Verbindungsplatte 11 ausübt. Die Verbindungsplatte 11 weist Ausnehmungen auf für ein Durchführen der Spannelemente 14. Die Spannelemente 14 sind mit dem Grundkörper 9 verbunden. Bei Verwendung von Schrauben als Spannelemente 14 weist der Grundkörper dafür Gewindebohrungen auf. Bei den erwähnten anderen Ausführungsbeispielen weist der Grundkörper entsprechende Befestigungsmittel auf.

Die Verbindungsplatte 11 ist in ihren Ausnehmungen mittels der Spannelemente 14 geführt gehalten. Außerdem ist bei weiteren erfindungsgemäßen Ausführungsbeispielen eine zusätzliche Führung mittels der Ausformung des Grundkörpers 9 vorsehbar, beispielsweise mittels hervorstehender Bereiche.

Der hervorstehende Zapfen 12 stellt ebenfalls eine Führung für die Verbindungsplatte 11 dar, die ihrer zugehörigen Ausnehmung 5 entsprechend in Pfeilrichtung verschiebbar angeordnet ist.

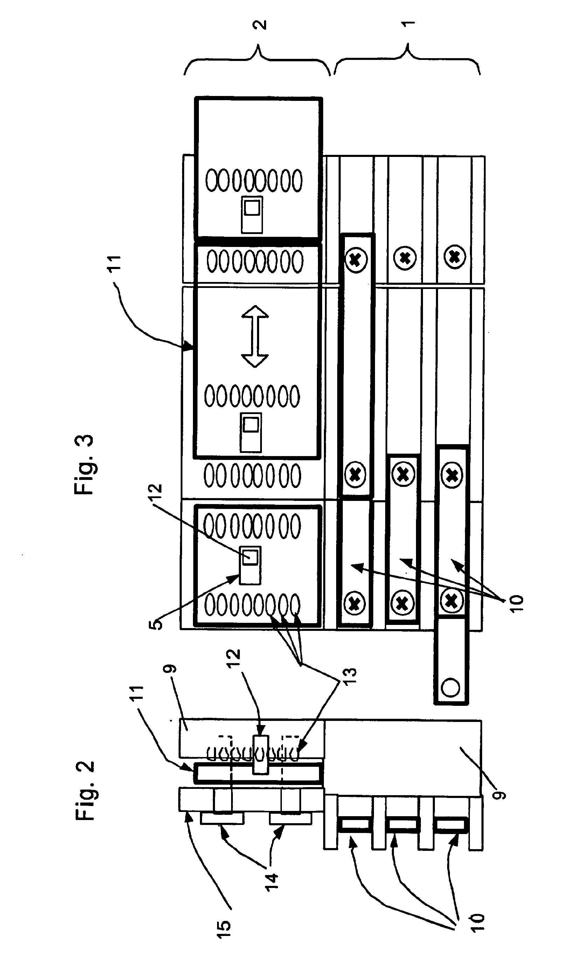

In der Figur 2 und 3 sind auch Stromschienen 10 zur Verbindung mit den anderen Modulen gezeigt, wobei einige Stromschienen der bessern Übersichtlichkeit wegen herausgenommen sind. Die Stromschienen 10 werden an entsprechende Anschlussvorrichtungen für Starkstrom angeschraubt.

Gemäß Figur 2 kontaktiert die beispielsweise aus PCB mit Leiterbahnen bestehende Verbindungsplatte 11 über Federkontakte 13 derart vorteilhaft, dass nur wenige Spannelemente 14, also die beispielhaft erwähnten Schrauben, benötigt werden.

Bei dem Ausführungsbeispiel gemäß Figur 2 erfolgt die Kontaktierung statt direkt über Schrauben oder andere Spannelemente indirekt über das Anpressen einer Druckplatte 15.

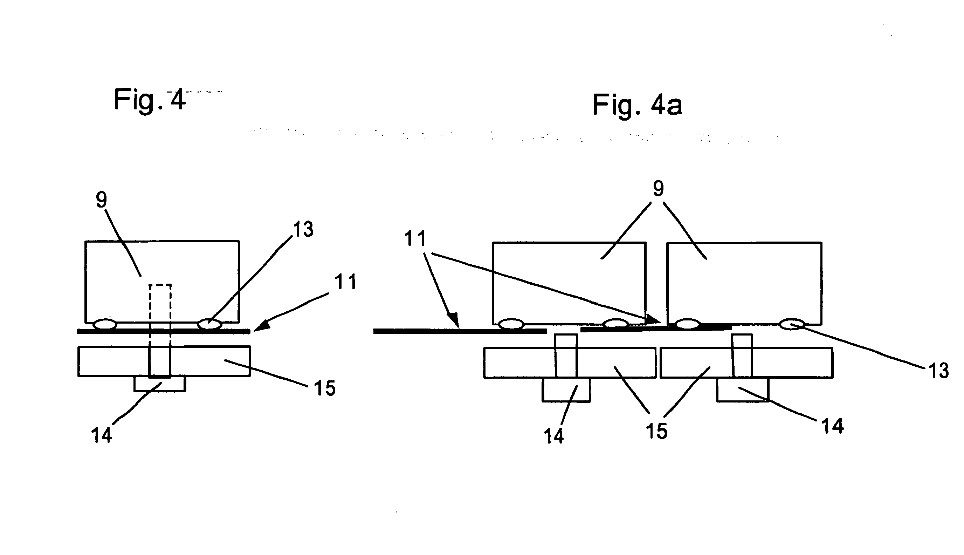

In der Figur 4 ist ein einzelnes Modul im Auslieferzustand gezeigt, also ist die Druckplatte 15 entfernt gehalten von der Verbindungsplatte 11.

In der Figur 4a sind zwei Module gezeigt, bei denen die Verbindungsplatten 11 verschoben sind. Die Verbindungsplatte 11 ist also auf die Breite jedes Moduls abgestimmt und ist nach links bzw. rechts verschiebbar, um dann am daneben befindlichen Modul kontaktiert zu werden, wie auch aus Figur 3 ersichtlich ist. Dies erlaubt die komplette Montage der Module, so dass dann als letzter Schritt bei der Montage nur noch die Verbindungsplatten 11 verschoben und kontaktiert werden. Nach dem Zurückschieben dieser Verbindungsplatten 11, kann dann auch ein Modul wieder aus dem Verbund entfernt werden.

Bei anderen erfindungsgemäßen Ausführungsbeispielen ist das Einschieben der Verbindungsplatten nicht in Pfeilrichtung sondern von oben, also senkrecht zur Pfeilrichtung, ausführbar. Genügt es zum Wechseln eines Moduls nur die Verbindungsplatten der nächsten Nachbarmodule und die jeweils zum Modul zugehörige Verbindungsplatte herauszunehmen.

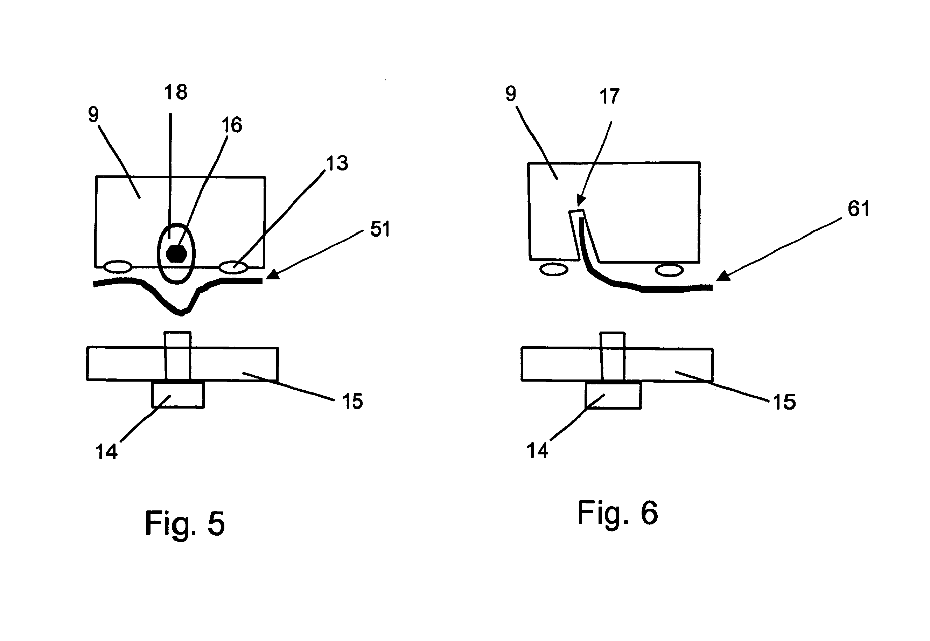

In Figur 5 und 6 sind weitere vorteilhafte Ausprägungen der Erfindung gezeigt. Dabei ist die Verbindungsplatte 51 flexibel ausgeführt, beispielsweise als flexible Leiterplatte. Dies erlaubt die gezielte Verbiegung derselben, so dass die Verbindung innerhalb der Breite eines Gerätes zurückgezogen werden kann. In Figur 5 ist schematisch gezeigt, wie die flexible Leiterplatte 51 mittels der Druckplatte 15 auf die Federkontakte 13 gedrückt werden kann. Mit dem an einer Welle 16 drehbaren Exzenter 18 ist die Hervorwölbung der flexiblen Leiterplatte 51 ausformbar.

In Figur 6 ist schematisch gezeigt, wie die flexible Leiterplatte 61 in eine Nut 17 gesteckt werden kann, um das Ende der flexiblen Leiterplatte 11 zu befestigen. In einer weiteren vorteilhaften Ausprägung gemäß Figur 6 der Erfindung ist eine Nut 17 vorhanden, die ein Zurückziehen der Verbindungsplatte 11 innerhalb des Gerätes erlaubt, also ein Einstecken in die Nut 17. Besonders vorteilhaft ist hierbei, dass beim Wechseln eines Moduls nur die flexible Leiterplatte 61 des Moduls und seiner nächsten Nachbarn aus der jeweiligen Nut 17 herauszunehmen ist.

In einer weiteren Ausprägung kann die Verbindungsplatte auch von oben zwischen zwei Geräte eingeschoben werden.

In weiteren erfindungsgemäßen Ausführungsbeispielen wird die Verbindungsplatte 11 oder auch die flexible Leiterplatte (51, 61) rückseitig mit einer flächigen Schirmplatte oder Folie versehen zur Verbesserung des EMV-lmmisions- und Emissionsverhaltens, wobei EMV elektromagnetische Verträglichkeit bedeutet, insbesondere gemäß Industrienorm oder gesetzlicher Vorschriften.

Bei der Erfindung ist besonders wesentlich und vorteilhaft, dass die Anschlusseinheiten 1 und 2, also für NSV und die GSZ, nebeneinander anordenbar sind und eine gemeinsame Abdeckung vorsehbar ist. Diese Abdeckung ist für die GSZ wegen der dort auftretenden Spannungswerte gesetzlich vorgeschrieben. Bei der Erfindung ist nun diese Abdeckung etwas verlängert ausführbar und somit die Anschlusseinheit 2 für die NSV ebenfalls abdeckbar. Da die Abdeckung für die GSZ gewisse isolier- und Abschirmeigenschaften erfüllen muss, wird auch der NSV entsprechend isoliert und abgeschirmt. Somit ist auch insgesamt das EMV- Immissions- und Emmissionsverhalten des Umrichtersystems sehr gut.

### Bezugszeichenliste

- 1: Anschlusseinheit für NSV
- 2: Anschlusseinheit für GSZ
- 3: Motorversorgungsleitungen
- 5: Ausnehmung
- 9: Grundkörper
- 10: Stromschienen
- 11: Verbindungsplatte
- 12: Zapfen
- 13: Federkontakt
- 14: Spannelemente
- 15: Druckplatte
- 16: Welle
- 17: Nut
- 18: Exzenter
- 51: flexible Leiterplatte
- 61: flexible Leiterplatte

## Patentansprüche

1. Umrichtersystem, umfassend mindestens ein Versorgungsmodul (VM) und mindestens ein Achsmodul (AM),
wobei die Module elektrische erste Anschlussvorrichtungen (13) für elektrischen Leitungen zum Herstellen von Niederspannungs- und Signalverbindungen aufweisen,
wobei die Module weitere Anschlussvorrichtungen für elektrische Leitungen (10) zur Leistungsversorgung der Achsmodule aufweisen,
**dadurch gekennzeichnet, daß**
zum Herstellen der elektrischen Niederspannungs- und Signalverbindungen zwischen benachbarten Modulen jedes Modul eine verschiebbare Verbindungsplatteß (11) umfasst, welche freiliegende Bereiche von elektrischen Leiterbahnen derart aufweist, dass bei geeigneter Verschiebung und/oder Positionierung der Verbindungsplatte (11) die ersten Anschlussvorrichtungen (13) mit den freiliegenden Bereichen in elektrischen Kontakt bringbar sind.

2. Umrichtersystem nach mindesten einem der vorangegangenen Ansprüche,
**dadurch gekennzeichnet, dass**
die ersten Anschlussvorrichtungen (13) mit den freiliegenden Bereichen mittels Spannelementen (14) und/oder einer Druckplatte (15) in elektrischen Kontakt bringbar sind.

3. Umrichtersystem nach mindesten einem der vorangegangenen Ansprüche,
**dadurch gekennzeichnet, dass**
der Gleichspannungszwischenkreis GSZ zur Leistungsversorgung der Module dient.

4. Umrichtersystem nach mindesten einem der vorangegangenen Ansprüche,
**dadurch gekennzeichnet, dass**
die Spannelemente (14) und/oder Druckplatte (15) zur elektrischen Isolierung und/oder Einhaltung elektrischer Vorschriften ausgelegt und verwendet sind.

5. Umrichtersystem nach mindesten einem der vorangegangenen Ansprüche,
**dadurch gekennzeichnet, dass**
der Grundkörper (9), die Druckplatte (15) und/oder die Spannelemente (14) aus Kunststoff, insbesondere aus Kunststoffspritzgus/s, ausgeführt sind.

6. Umrichtersystem nach mindesten einem der Ansprüche 1 bis 4,
**dadurch gekennzeichnet, dass**
der Grundkörper (9) die Druckplatte (15) und/oder die Spannelemente (14) zumindest teilweise metallisch ausgeführt sind.

7. Umrichtersystem nach mindesten einem der vorangegangenen Ansprüche,
**dadurch gekennzeichnet, dass**
die Druckplatte (15) eine metallische Schicht, eine flächige Schirmplatte oder eine metallische Folie umfasst.

8. Umrichtersystem nach mindesten einem der vorangegangenen Ansprüche,
**dadurch gekennzeichnet, dass**
die Module jeweils eine Abdeckung zur elektrischen Isolierung der weiteren Anschlussvorrichtungen für elektrischen Leitungen (10) für Starkstrom aufweisen
und dass die Abdeckung auch für die ersten Anschlussvorrichtungen (13) vorgesehen ist, insbesondere auch zur Isolierung und/oder Einhaltung elektrischer Vorschriften.

9. Umrichtersystem nach mindesten einem der vorangegangenen Ansprüche,
**dadurch gekennzeichnet, dass**
die Verbindungsplatte (11) an mindestens einer Position arretierbar oder befestigbar ist und nach Loslösen verschiebbar ist.

10. Umrichtersystem nach mindesten einem der vorangegangenen Ansprüche,
**dadurch gekennzeichnet, dass**
das Umrichtersystem verschieden breite Module umfasst
und dass die Breite der Verbindungsplatte (11) jeweils auf die Breite der Module derart abgestimmt ist, dass die Kontaktierung der Federkontakte (13) des Nachbarmoduls durch Verschieben um bei allen Modulen stets den selben Betrag erreichbar ist.

11. Umrichtersystem nach mindesten einem der vorangegangenen Ansprüche,
**dadurch gekennzeichnet, dass**
die Anschlusseinheiten 1,2 mittels einer gemeinsamen Abdeckung versehen sind.

## Claims

1. A converter system comprising at, least one supply module (VM) and at least one axis module (AM),
wherein the modules have electrical first connecting devices (13) for electrical lines to produce low-voltage and signal connections,
wherein the modules have further connecting devices for electrical lines (10) to supply power to the axis modules,
**characterised in that** to produce the electrical low-voltage and signal connections between adjacent modules, each module comprises a displaceable connecting plate (11) having exposed regions of electrical wiring paths in such a manner that upon appropriate displacement and/or positioning of the connecting plate (11), the first connecting devices (13) can be brought into electrical contact with the exposed regions.

2. A converter system according to at least one of the preceding claims,
**characterised in that** the first connecting devices (13) can be brought into electrical contact with the exposed regions by means of clamping elements (14) and/or a pressure plate (15).

3. A converter system according to at least one of the preceding claims,
**characterised in that** the direct voltage intermediate circuit GSZ serves to supply power to the modules.

4. A converter system according to at least one of the preceding claims,
**characterised in that** the clamping elements (14) and/or pressure plate (15) are configured and used for electrical insulation and/or adherence to electrical regulations.

5. A converter system according to at least one of the preceding claims,
**characterised in that** the basic body (9), the pressure plate (15) and/or the clamping elements (14) are of plastics material, in particular of an injection moulded plastics material.

6. A converter system according to at least one of claims 1 to 4,
**characterised in that** the basic body (9), the pressure plate (15) and/or the clamping elements (14) are at least partially metallic.

7. A converter system according to at least one of the preceding claims,
**characterised in that** the pressure plate (15) comprises a metallic layer, a plane shielding plate or a metallic sheet.

8. A converter system according to at least one of the preceding claims,
**characterised in that** the modules each have a cover for electrical insulation of the additional connecting devices for electrical lines (10) for heavy current, and **in that** the cover is also provided for the first connecting devices (13), in particular also for insulation and/or adherence to electrical regulations.

9. A converter system according to at least one of the preceding claims,
**characterised in that** the connecting plate (11) can be locked or secured at at least one position and can be displaced after release.

10. A converter system according to at least one of the preceding claims,
**characterised in that** the converter system comprises modules of different width, and **in that** the width of the connecting plate (11) is in each case matched to the width of the modules in such a manner that contacting of the spring contacts (13) of the neighbouring module can be achieved by displacement by always the same amount for all modules.

11. A converter system according to at least one of the preceding claims,
**characterised in that** the connecting units 1, 2 are provided by means of a common cover.

## Revendications

1. Système variateur, comprenant au moins un module d'alimentation (VM) et au moins un module d'axe (AM),
les modules présentant de premiers dispositifs de raccordement électrique (13) pour des lignes électriques destinés à établir des connexions basse tension et de signaux,
les modules présentant d'autres dispositifs de raccordement pour des lignes électriques (10) pour l'alimentation en puissance des modules d'axe,
**caractérisé en ce que**
pour établir les connexions électriques basse tension et de signaux entre modules voisins, chaque module comprend une plaque de connexion (11) déplaçable, laquelle présente des zones dégagées de pistes conductrices électriques de manière qu'en cas de déplacement et/ou positionnement approprié de la plaque de connexion (11), les premiers dispositifs de raccordement (13) puissent être mis en contact électrique avec les zones dégagées.

2. Système variateur selon au moins l'une des revendications précédentes,
**caractérisé en ce que**
les premiers dispositifs de raccordement (13) peuvent être mis en contact électrique avec les zones dégagées au moyen d'éléments de serrage (14) et/ou d'une plaque de pression (15).

3. Système variateur selon au moins l'une des revendications précédentes,
**caractérisé en ce que**
le circuit intermédiaire à tension continue GSZ sert à l'alimentation en puissance des modules.

4. Système variateur selon au moins l'une des revendications précédentes,
**caractérisé en ce que**
les éléments de serrage (14) et/ou la plaque de pression (15) sont conçus et utilisés pour l'isolation électrique et/ou le respect de prescriptions électriques.

5. Système variateur selon au moins l'une des revendications précédentes,
**caractérisé en ce que**
Le corps de base (9), la plaque de pression (15) et/ou les éléments de serrage (14) sont réalisés en matière plastique, en particulier en matière plastique moulée par injection.

6. Système variateur selon au moins l'une des revendications 1 à 4,
**caractérisé en ce que**
Le corps de base (9), la plaque de pression (15) et/ou les éléments de serrage (14) sont réalisés au moins partiellement en métal.

7. Système variateur selon au moins l'une des revendications précédentes,
**caractérisé en ce que**
la plaque de pression (15) comprend une couche métallique, une plaque de blindage plane ou une feuille métallique.

8. Système variateur selon au moins l'une des revendications précédentes,
**caractérisé en ce que**
les modules présentent chacun un recouvrement pour l'isolation électrique des autres dispositifs de raccordement pour des lignes électriques (10) pour courant fort et que le recouvrement est prévu aussi pour les premiers dispositifs de raccordement (13), en particulier aussi pour l'isolation et le respect de prescriptions électriques.

9. Système variateur selon au moins l'une des revendications précédentes,
**caractérisé en ce que**
la plaque de connexion (11) peut être bloquée ou fixée dans au moins une position et déplacée après desserrage.

10. Système variateur selon au moins l'une des revendications précédentes,
**caractérisé en ce que**
le système variateur comprend des modules de différente largeur
et que la largeur de la plaque de connexion (11) est adaptée à la largeur respective des modules de manière que le contact avec les contacts à ressort (13) du module voisin puisse être obtenu par déplacement du même montant pour tous les modules.

11. Système variateur selon au moins l'une des revendications précédentes,
**caractérisé en ce que**
les unités de raccordement 1, 2 sont pourvues d'un recouvrement commun.
